# EUROPEAN PATENT SPECIFICATION

(11) **EP 3 230 913 B1**
(45) Date of publication and mention of the grant of the patent: **04.11.2020**
(21) Application number: 14907903.0
(22) Date of filing: 11.12.2014
(51) Int. Cl.: G06F 21/30, G06F 21/10, G06F 21/74, G06F 21/57

(54) **TRUSTED PREDICTIVE ANALYTIC EXECUTION MIDDLEWARE**
SICHERE MIDDLEWARE FÜR PRÄDIKTIVE ANALYTISCHE AUSFÜHRUNG
INTERGICIEL SÉCURISÉ POUR EXÉCUTION D'ANALYSES PRÉDICTIVES

(43) Date of publication of application: 18.10.2017
(73) Proprietor: Intel Corporation, Santa Clara, CA 95054 (US)
(72) Inventor: CHEN, Feng, Shanghai 200135 (CN); HAO, Yan, Shanghai 200241 (CN); YANG, Yi, Shanghai 201101 (CN); CHEN, Xiaoming, Shanghai 200241 (CN)
(74) Representative: Rummler, Felix
(86) International application number: PCT/CN2014/093600
(87) International publication number: WO 2016/090606

(56) References cited:
- CN-A- 102 916 929
- CN-A- 103 152 179
- US-A1- 2013 096 943
- US-A1- 2014 013 423
- US-A1- 2014 181 965
- US-B1- 8 311 967
- MARTIN HENZE ET AL: "Maintaining User Control While Storing and Processing Sensor Data in the Cloud :", INTERNATIONAL JOURNAL OF GRID AND HIGH PERFORMANCE COMPUTING, vol. 5, no. 4, 1 October 2013 (2013-10-01) , pages 97-112, XP055463998, ISSN: 1938-0259, DOI: 10.4018/ijghpc.2013100107
- Anonymous: "Expanded Top Ten Big Data Security and Privacy Challenges", , 30 April 2013 (2013-04-30), XP055463992, Retrieved from the Internet: URL:https://downloads.cloudsecurityallianc e.org/initiatives/bdwg/Expanded_Top_Ten_Bi g_Data_Security_and_Privacy_Challenges.pdf [retrieved on 2018-03-29]

## Description

### BACKGROUND

The technical field of predictive analytics includes the application of computational techniques, such as machine learning and data mining, to typically large data sets. Previously unknown patterns, such as similarities, differences, and relationships between different elements of a data set, can be discovered by these computational techniques. Predictive algorithms, such as statistical methods, can be used to identify trends and predict future outcomes based on patterns that are found in the data set. Many predictive analytics techniques are model-based. For example, a mathematical model may be constructed that represents relationships between elements in a data set and conclusions about those data elements. The model can be "trained" using a "trainer" data set for which those relationships are already known.

Predictive analytics can be provided as a service running on a computer network. Face detection (e.g., the ability to, using a computer, identify a human face in a digital photograph) is an application of predictive analytics that can be provided as a service to multiple different types of computing devices and applications, over a network. In automated face detection, the trainer data set may include a very large number of sample photographs of human faces coupled with descriptive tags indicating features shown in the photographs. The trainer data is used to train the model, for instance to establish probabilities that certain combinations of features shown in the photographs are representative of certain types of people (e.g., male, female, young, old). The model and the trainer data can then be used to classify new input photographs (e.g., photographs that are not already in the existing data set).

"Maintaining User Control while Storing and Processing Sensor Data in the Cloud" by Henze et al. (International Journal of Grid and High Performance Computing, vol. 5, no. 4, pages 97-112, XP55463998, ISSN:1938-0259, DOI:10.4018/ijghpc.201300107) relates to an entry point from a sensor network into the Cloud, which aims to enforce end-to-end data protection, apply encryption and integrity protection, and grant data access.

US2013/096943 relates to a system that is a cloud-based system for the trusted storage and analysis of genetic and other information. The system includes authenticated and certified data sources; authenticated and certified diagnostic tests; and policy-based access to data.

### BRIEF DESCRIPTION OF THE DRAWINGS

The concepts described herein are illustrated by way of example and not by way of limitation in the accompanying figures. For simplicity and clarity of illustration, elements illustrated in the figures are not necessarily drawn to scale. Where considered appropriate, reference labels have been repeated among the figures to indicate corresponding or analogous elements.
FIG. 1 is a simplified block diagram of at least one embodiment of a computing system, including trusted predictive analytics middleware as disclosed herein;
FIGS. 2A and 2B are simplified architecture diagrams of the trusted predictive analytics middleware of FIG. 1;
FIGS. 3A-3D are simplified environment diagrams of the trusted predictive analytics middleware of FIG. 1;
FIG. 4 is a simplified flow diagram of at least one embodiment of a method for providing trusted predictive analytics as disclosed herein, which may be executed by one or more components of the computing system of FIG. 1; and
FIG. 5 is a simplified flow diagram of at least one embodiment of a method for generating a trusted version of a predictive analytics service as disclosed herein, which may be executed by one or more components of the computing system of FIG. 1.

### DETAILED DESCRIPTION OF THE DRAWINGS

The present invention is defined by the appended independent claims. While the concepts of the present disclosure are susceptible to various modifications and alternative forms, specific embodiments thereof have been shown by way of example in the drawings and will be described herein in detail.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one A, B, and C" can mean (A); (B); (C); (A and B); (B and C); (A and C); or (A, B, and C). Similarly, items listed in the form of "at least one of A, B, or C" can mean (A); (B); (C): (A and B); (B and C); (A and C); or (A, B, and C).

The disclosed embodiments may be implemented, in some cases, in hardware, firmware, software, or any combination thereof. The disclosed embodiments may also be implemented as instructions carried by or stored on a transitory or non-transitory machine-readable (e.g., computer-readable) storage medium, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

Predictive analytics services can introduce vulnerabilities that raise user privacy and/orintellectual property rights management issues. For instance, when an end user's digital photograph is uploaded to a network, a face recognition service may have access to private information associated with the photograph. At the same time, proprietary information about the model and/or training data used by the face recognition service may be exposed to the client device. Further, many current predictive analytics products are installed as monolithic, vertical software stacks in which the predictive models are tightly coupled with the training data. This can result in the user needing to install many different vertical software stacks to solve different types of predictive analytics problems, or even to solve the same problem in different ways. The situation is exacerbated by the proliferation of many different types of networked computing devices (e.g., smartphones, tablets, wearable devices, laptops, desktops, etc.), each of which may require a different version of the model description, or may require a different version of a model that is optimized for a particular platform.

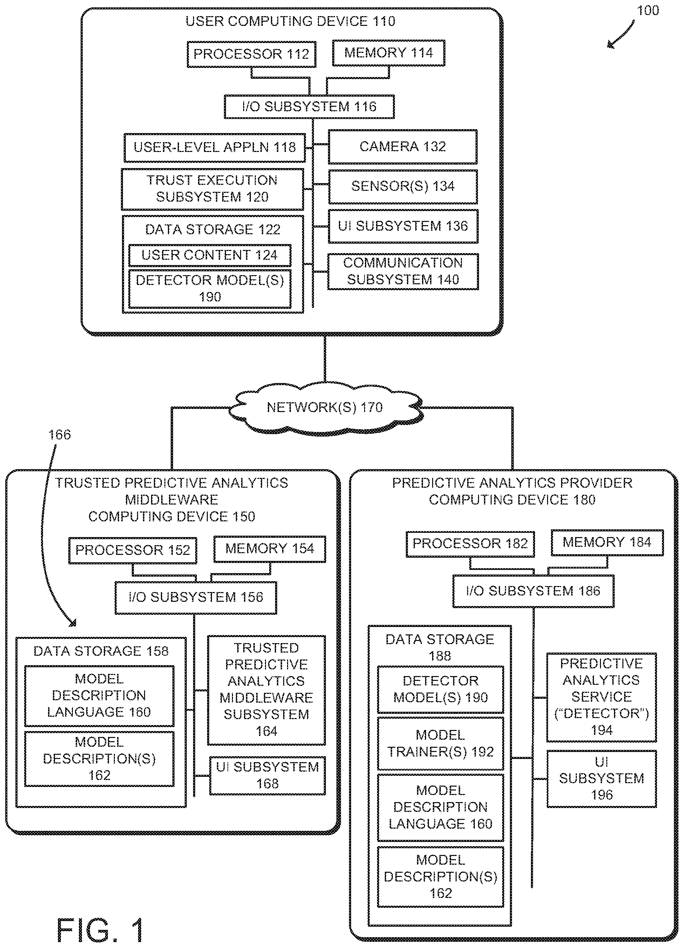

Referring now to FIG. 1, an embodiment of a computing system 100 includes trusted predictive analytics middleware or "trusted middleware" 166. The trusted predictive analytics middleware 166 includes a model description language 160 and a trusted predictive analytics middleware service or "middleware service" 164. Illustratively, the components of the trusted predictive analytics middleware 166 are embodied in a trusted predictive analytics middleware computing device 150; however, portions of the trusted predictive analytics middleware 166 may reside on one or more other computing devices as described in more detail below.In the computing system 100, a user computing device 110 (such as a mobile or wearable computing device) executes a user-level application 118 from time to time. The user-level application 118 may, from time to time, request access to a predictive analytics service or "detector" 194. The illustrative predictive analytics service (e.g., "detector") 194 is embodied in a predictive analytics provider computing device 180. The user computing device 110, the trusted predictive analytics middleware computing device 150, and the predictive analytics provider computing device 180 are communicatively coupled by one or more networks 170.

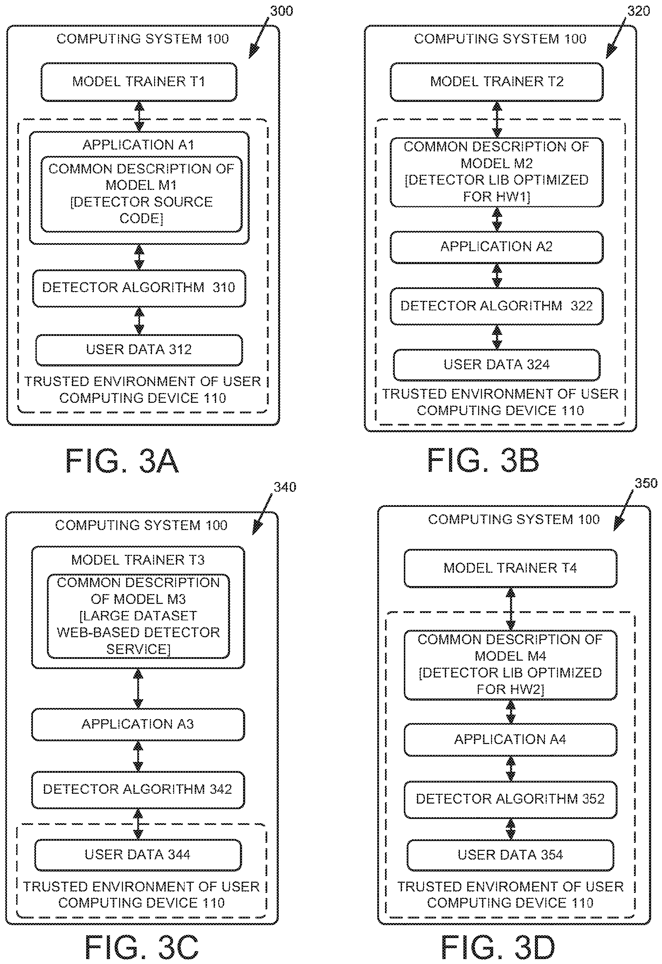

In an example scenario, the user-level application 118 may be a camera application, a photo uploading service, or a front end to a social media service such as FACEBOOK or PINTEREST. The user computing device 110 is configured with a trust execution subsystem 120. The trust execution subsystem 120 may be embodied as a hardware- or software-implemented Trusted Platform Module (TPM) or using a TrustZone by ARM, for example. When a user-level application 118 requests access to the predictive analytics service (e.g., "detector") 194, the trust execution subsystem 120 launches the trusted predictive analytics middleware 166 in a trusted execution environment.By running in a trusted execution environment and instantiating an executable trusted predictive analytics service (e.g., "detector") 194 that is based on a model description that is created using the model description language 160, the trusted predictive analytics middleware 166 provides a common trusted execution environment in which the predictive analytics service (e.g., "detector") 194 can be executed and sensitive data can be isolated. The illustrative predictive analytics service (e.g., "detector") 194 provides a data analytics service, such as a machine learning-based data analysis service or a "big data" analytics service. Some example implementations of the predictive analytics service (e.g., "detector") 194 are shown in FIGS. 3A-3D. As described in more detail below, the trusted predictive analytics middleware 166 uses cryptographic techniques and digital rights management techniques to protect sensitive user data from inadvertent exposure or misuse by the predictive analytics service (e.g., "detector") 194 and/orprotect intellectual property rights associated with the predictive analytics service (e.g., "detector") 194.Additionally, through the model description language 160, the trusted predictive analytics middleware 166 provides a common interface to predictive analytics services across different device architecturesranging from smartphones, tablets, laptops and personal computers to wearable devices, such as smart glasses, smart watches, tovirtual instances running "in the cloud," and/or others.

Using the model description language 160, the trusted middleware 166 avoids the need to have multiple different predictive analytics services (e.g., "detectors") 194 running on the middleware platform. Instead, the middleware 166 replaces the different predictive analytics services (e.g., "detectors") 194 with different instances of a predictive analytics service (e.g., "detector") 194, where each of the instances is created from an execution primitive whose operation is supported by the trusted middleware 166. The trusted middleware 166 decrypts and instantiates a predictive analytics service (e.g., "detector") 194 using a model description 162. The model description 162 is created by the middleware 166 using the model description language 160.Digital rights management functionality of the trusted middleware 166 enforces license agreement terms and restrictions on the use of the predictive analytics service (e.g., "detector") 194. User data (e.g., user content 124) is protected because it is accessed by the middleware primitive (e.g., the predictive analytics service or "detector" 194 instantiated using the model description 162) inside the trust execution environment and thus, the user data is not directly exposed to the predictive analytics service (e.g., "detector") 194.

Referring now in more detail to FIG. 1, the user computing device 110 may be embodied as any type of electronic device for performing the functions described herein. For example, the user computing device 110 may be embodied as, without limitation, a smart phone, a tablet computer, a wearable computing device, a laptop computer, a notebook computer, a mobile computing device, a cellular telephone, a handset, a messaging device, a vehicle telematics device, a server computer, a workstation, a distributed computing system, a multiprocessor system, a consumer electronic device, and/or any other computing device configured to perform the functions described herein. As shown in FIG. 1, the illustrative user computing device 110 includes at least one processor 112.

The user computing device 110 also includes memory 114, an input/output subsystem 116, a data storage device 122, a camera 132, one or more sensors 134, a user interface (UI) subsystem 136, and a communication subsystem 140. The user computing device 110 may include other or additional components, such as those commonly found in a mobile and/or stationary computer, in other embodiments. Additionally, in some embodiments, one or more of the illustrative components may be incorporated in, or otherwise form a portion of, another component. Each of the components of the user computing device 110 may be embodied as software, firmware, hardware, or a combination of software, firmware, and/or hardware.

The processor 112 may be embodied as any type of processor capable of performing the functions described herein. For example, the processor 112 may be embodied as a multi-core processoror other multiple-CPU processor or processing/controlling circuit. The memory 114 of the user computing device 110 may be embodied as any type of volatile or non-volatile memory or data storage capable of performing the functions described herein. In operation, the memory 114 may store various data and software used during operation of the user computing device 110, as well as operating systems, applications, programs, libraries, and drivers.

The memory 114 is communicatively coupled to the processor 112, e.g., via the I/O subsystem 116. The I/O subsystem 116 may be embodied as circuitry and/or components to facilitate input/output operations with the processor 112, the memory 114, and other components of the user computing device 110. For example, the I/O subsystem 116 may be embodied as, or otherwise include, memory controller hubs, input/output control hubs, firmware devices, communication links (i.e., point-to-point links, bus links, wires, cables, light guides, printed circuit board traces, etc.) and/or other components and subsystems to facilitate the input/output operations. In some embodiments, the I/O subsystem 116 may form a portion of a system-on-a-chip (SoC) and be incorporated, along with the processor 112, the memory 114, and/or other components of the user computing device 110, on a single integrated circuit chip.

The data storage device 122 may be embodied as any type of physical device or devices configured for short-term or long-term storage of data such as, for example, memory devices and circuits, memory cards, hard disk drives, solid-state drives, flash memory or other read-only memory, memory devices that are combinations of read-only memory and random access memory, or other data storage devices.User content 124 (e.g., digital content, such as photographs, videos, music files, and documents) and detector models 190 are stored in the data storage device 122. Portions of the user content 124 and/or the detector models 190 may be copied to the memory 114 from time to time during operation of the computing device 110, e.g., for faster processing.

The camera 132 may be embodied as any type of camera capable of performing the functions described herein, e.g., capturing still and/or video images using camera hardware, software, or a combination of hardware and software. The sensor(s) 134 may be embodied as any suitable type of sensor capable of performing the functions described herein, including one or more of motion sensors, proximity sensors, location sensors, and eye tracking devices.

The user interface subsystem 136 may include a number of additional devices to facilitate user interaction with the user computing device 110, including physical or virtual control buttons or keys, a microphone, a speaker, a display device, and/or others. For example, a display device may be embodied as any type of display capable of displaying digital information such as a liquid crystal display (LCD), a light emitting diode (LED), a plasma display, a cathode ray tube (CRT), or other type of display device. In some embodiments, the display device may be coupled to a touch screen or other human computer interface device to allow user interaction with the user computing device 110. The user interface subsystem 136 may also include other devices, such as motion sensors, proximity sensors, and eye tracking devices, which may be configured to detect, capture, and process various other forms of human interactions involving the user computing device 110 .

The user computing device 110 further includes a communication subsystem 140, which may be embodied as any communication circuit, device, or collection thereof, capable of enabling communications between the user computing device 110 and other electronic devices. The communication subsystem 140 may be configured to use any one or more communication technology (e.g., wireless, optical, or wired communications) and associated protocols (e.g., Ethernet, Bluetooth®, Wi-Fi®, WiMAX, 3G/LTE, etc.) to effect such communication. The communication subsystem 140 may be embodied as a network adapter, including a wireless network adapter.

The illustrative user computing device 110 also includes a number of computer program components, such as the user-level application 118, the trust execution subsystem 120, and one or more detector models 190, described below. The user-level application 118 may be embodied as any computer application (e.g., software, firmware, hardware, or a combination thereof) that interacts directly or indirectly with an end user via, for example, a display device or another component of the UI subsystem 136. Some examples of user-level applications 118 include word processing programs, document viewers/readers, web browsers, electronic mail programs, messaging services, social media services, content sharing services, computer games, camera and video applications, etc. While not specifically shown, the user computing device 110 includes a privileged system component that facilitates communication between the user-level applications 118 and the hardware components of the user computing device 110. Portions of the privileged system component 142 may be embodied as any operating system capable of performing the functions described herein, such as a version of WINDOWS by Microsoft Corporation, ANDROID by Google, Inc., and/or others. Alternatively or in addition, portion of the privileged system component 142 may be embodied as any type of virtual machine monitor capable of performing the functions described herein (e.g., a type I or type II hypervisor).

The trusted predictive analytics middleware computing device 150 and the predictive analytics provider computing device 180 may each be embodied as any type of electronic device for performing the functions described herein. For example, the computing devices 150, 180 may be embodied as, without limitation, a server computer, a workstation, a distributed computing system, a multiprocessor system, a consumer electronic device, a smart phone, a tablet computer, a wearable computing device, a laptop computer, a notebook computer, a mobile computing device, a cellular telephone, a handset, a messaging device, a vehicle telematics device, and/or any other computing device configured to perform the functions described herein. As shown in FIG. 1, the illustrative computing devices 150, 180 include, respectively, at least one processor 152, 182, memory 154, an I/O subsystem 156, a data storage device 158, 188, and a UI subsystem 168, 196. Components of the computing devices 150, 180 having the same or similar name as components of the user computing device 110 may be embodied in a similar fashion to those components described above; therefore, the description is not repeated here. As mentioned above, the illustrative trusted predictive analytics middleware computing device 150 embodies the trusted predictive analytics middleware 166, including the model description language 160 stored in the data storage device 158 and the trusted predictive analytics middleware subsystem 164. The data storage device 158 also stores model descriptions 162. In operation, portions of the model description language 160 and/or the model descriptions 162 may be copied to the memory 154, e.g., for faster processing. The illustrative predictive analytics provider computing device 180 embodies the predictive analytics service (e.g., "detector") 194, including one or more detector models 190 and one or more model trainers (e.g., training data sets) 192 stored in the data storage device 188. In operation, portions of the detector model(s) 190 and/or the model trainer(s) 192 may be copied to the memory 184, e.g., for faster processing. Portions of any of the data and/or computer program components of the computing system 100, e.g., the user-level application 118, the trust execution subsystem 120, the user content 124, the trusted predictive analytics middleware 166, and the predictive analytics service (e.g., "detector") 194 may reside on computing devices other than those shown in FIG. 1. Further, in some embodiments, all of such components (e.g., the user-level application 118, the trust execution subsystem 120, the user content 124, the trusted predictive analytics middleware 166, and the predictive analytics service (e.g., "detector") 194) may reside on a single computing device (e.g., the computing device 110, the trusted predictive analytics middleware computing device 150, or the predictive analytics provider computing device 180).

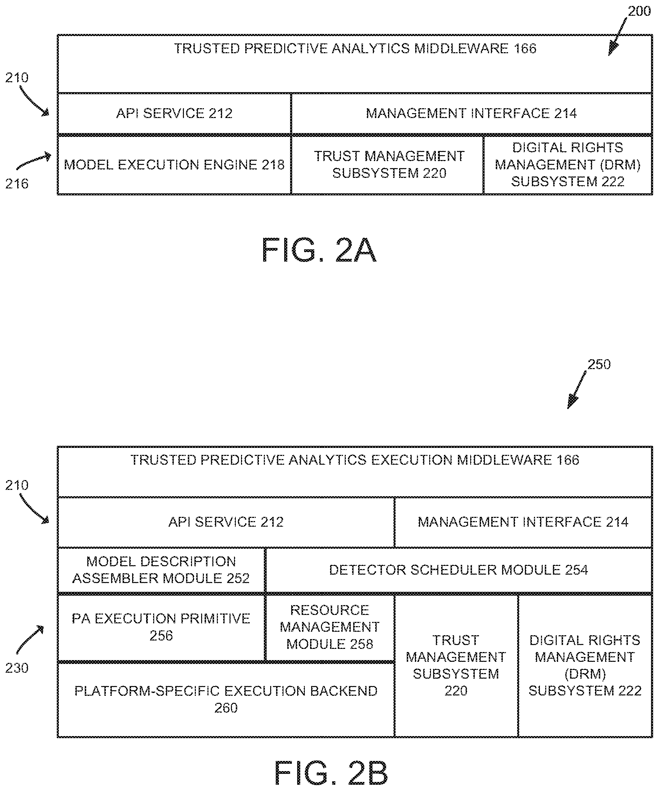

As noted above, the trusted middleware 166 includes a model description language 160 and a trusted predictive analytics middleware subsystem 164. The model description language 160 includes a model specification and parameter information. The model description language 160 is interpreted using components of the middleware subsystem 164, as described in more detail below.Referring now to FIGS. 2A and 2B, an embodiment of illustrative architectures for portions of the trusted predictive analytics middle ware subsystem 164is shown. In FIG. 2A, a high level architecture 200 is shown. At a high level of abstraction, the architecture 200 includes an interface layer 210 and an execution layer 216. Within the interface layer 210, the architecture 200 includes an application programming interface (API) service 212 and a management interface 214.The API service 212 provides an interface by which user-level applications 118 (e.g., A1, A2, A3, A4 in FIGS. 3A-3D) can issue predictive analytics services requests to the trusted middleware 166. The management interface 214 provides an interface by which operating systems or underlying systems services can accomplish tasks such as provisioning, auditing, and upgrading of components of the trusted middleware 166. Within the execution layer 216, the illustrative components include, at a high level, a model execution engine 218, a trust management subsystem 220, and a digital rights management (DRM) subsystem 222. The model execution layer 216 is responsible for the whole life cycle of a predictive analytics (PA) task, which includes performing activities, for example: create a PA task based on model descriptions 162 using the model description assembler model 252, launch PA tasks, and schedule the different PA tasks with detector scheduler module 254, map the operation described in the model description 162 to a set of primitives subtracted from a wide range type of predictive analysis tasks, such as: do convolution of input, populate input to a polynomial formula, etc.(e.g., such tasks shown as PA execution primitive 256) and computing resource management(e.g., memory, etc., through resource management module 258).

A highly optimized PA execution primitive 256 is implemented on top of one or more platform-specific execution backends 260 (where the execution backends 260 may include: a specific implementation based on a platform-specific instruction set (e.g., the Intel AVX instruction set), an implementation based on a specificgraphics processing unit (GPU), or an implementation based on platform-specific acceleration technology (e.g., a floating point gate array (FPGA) in a customized processor (e.g., the Xeon processor by Intel). The trust management subsystem 220 is responsible for monitoring the execution of the framework 200 in a trusted way. The trust management subsystem 220 can prevent the modification of framework 200, to ensure that the framework's behavior acts as intended and cannot be modified by a malfunctioning process running on the same system. The trust management subsystem 220 can protect the access of privacy data and prevent the access of sensitive data, like decrypted modeling descriptions, a PA task's code page in memory, etc.

The DRM subsystem 222 is responsible for managing digital rights access and protection of the model 190's owner. The illustrative DRM subsystem 222 can play two roles. The first role is to manage the key and cryptographic operations as defined by the DRM protocol.The second role is to control the framework 200 topermit access to the content of the model 190only in the way licensed by the model owners, for example, at fixed times, on a fixed size of input data, etc.The DRM subsystem 222 operates to ensure thatframework 200protects the model owner's digital rights in the model 190.Each of the components 218, 220, 222 may be embodied as computer hardware, firmware, software, or a combination thereof.

Referring to FIG. 2B, a more detailed illustration 230 of the components of an embodiment of the execution layer 216 is shown. The illustrative execution layer 230 includes a model description assembler module 252, a detector scheduler module 254, a predictive analytics execution primitive 256, a resource management module 258, a platform-specific execution backend 260, a trust execution monitor module 262, and a DRM manager module 264. Each of the components 252, 254, 256, 258, 260, 262, 264 may be embodied as computer hardware, firmware, software, or a combination thereof.

The model description assembler module 252 takes as input a detector model 190 of a predictive analytics service (e.g., "detector") 194 (e.g., M1, M2, M3, or M4 described below), interprets the detector model 190 using the model description language 160, and thereby generates a model description 162 of the detector model 190 in the model description language 160. In some embodiments, the generation of the model description 162 (e.g., the conversion of the detector 194 to the model description 162 is performed as a one-time event, which may be performed on the predictive analytics provider computing device 180. Once the model description 162 is created (e.g., on the provider computing device 180), the detector 194 can be deployed to the trusted PA middleware computing device 150 or to another computing device (e.g., by the trusted predictive analytics middleware subsystem 164). As a result of the model interpretation, the assembler module 252 obtains information about the structure of the detector model 190 and the associated parameters. With this information, the assembler module 252 creates an executable instance of the predictive analytics service (e.g., "detector") 194 based on the model description 162 and using the predictive analytics execution primitive 256, which is supplied by the middleware 166. To do this, the assembler module 252 maps the node of the model structure to the predictive analytics execution primitive 256 (e.g., by code logic) and maps execution variables to model parameters embedded in the model description 162. The assembler module 252 may apply one or more optimization algorithms (e.g., to remove any redundant operations). In this way, the assembler module 252 creates a "trusted" version of the predictive analytics service (e.g., "detector") 194 that has a common execution primitive with other predictive analytics services and specifies the model description 162 using the common description language 160.

The model description 162 provides a minimal set of information that can be used to re-build an executable detector, assuming the detector will run on the middleware. The model description 162 includes model structures, model parameters, and model meta information about the model. References to "model structure" herein may refer to, among other things, a graph or tree structure, which is commonly used to represent analytical models, as well as nodes and the network structure (e.g., arrangement of nodes and edges). As used herein, "node" may refer to, among other things, a primitive connection. Connections and network structure determine a composition rule, which establishes the control flow through the model network. Some examples of model structures include acyclic graphs, probabilistic graphical models, Bayesian networks, multi-layer network structures, and/or others. Model parameters provide coefficients, such as primitive coefficients, connection coefficients, and network coefficients. Meta information provides information about the detector model (e.g., "comments"). For example, the meta information may indicate the kind of problem or application for which the detector is suitable, the inputs required by the detector, and information about how the detector is trained. Meta information can typically be released publicly, e.g., by a directory service. Meta information enables the user-level application 118 to run queries using a search engine to find detectors that are suitable for particular tasks (e.g., detectors whose meta information matches business requirements specified by the user-level application 118).Some examples of model meta information include trained data size (e.g., the size of a training data set) and input format (e.g., formatting requirements for input data, if any).

Once the assembler module 252 creates an optimized executable of the predictive analytics service (e.g., "detector") 194, the executable is submitted to the detector scheduler module 254. The detector scheduler module 254 schedules and executes detectors that are instantiated by the assembler module 252, and interacts with the resource management module 258, the trust execution monitor module 262, and the DRM manager module 264. The scheduler module 254 handles data distribution and identifies and eliminates redundant data copy if possible. The scheduler module 254 manages the life-cycle of an instantiated detector and frees the resource when the detector finishes execution.

The predictive analytics execution primitive 256 is an executable that performs a common predictive analytics task in an efficient way. As such, the predictive analytics execution primitive 256 can form the basis of many types of detectors. The resource management module 258 manages resources such as data storage and memory allocation. The trust execution monitor module 262 and the DRM manager module 264 expose the standard trust execution and DRM management components to the layers above (e.g., the scheduler module 254 and /or management interface 214). The platform-specific execution backend 260 enables the middleware 166 to interface with platform-specific capabilities across many different types of devices and computing platforms.

In more detail, the trust management subsystem 220 (FIG. 2A) secures the DRM of the instantiated detector and protects the privacy of the input data. The trusted middleware 166 has a native connection with the trust computing components of the native operating system/privileged system component (e.g., a virtual machine monitor or VMM, or hypervisor). In a virtualized architecture, when the middleware 166 executes in a trust mode, the middleware 166 runs inside the privileged system component (e.g., VMM or hypervisor). As a result, sensitive data is stored in a page in the secured trust mode. The data is read from an encrypted data source or from a sensitive sensor. When the trusted middleware 166 is launched by a trusted launch (e.g., by the trust execution subsystem 120), insensitive user content 124 (e.g., a publicly available news page grabbed by the user's web browser) will be allocated to memory managed by a guest operating system, which the trusted middleware 166 can access. The underlying trust execution mechanism may be embodied as, for example, a TXT (Trusted Execution Technology by Intel), such as an IntelTrusted Platform Module (TPM)-based mechanism or a hybrid solution based on TrustZone by ARM

Referring now in more detail to the DRM subsystem 222 (FIG. 2A), the DRM subsystem 222 protects the intellectual property of detector models 190 (e.g., M1, M2, M3, M4 discussed below) and model trainers 192 (e.g., T1, T2, T3, T4 discussed below). When a user-level application 118 (e.g., A1, A2, A3, A4 discussed below) wants to initiate the middleware 166, the DRM subsystem 222 checks the license agreement and/or usage restrictions for the requested middleware service, instead of simply instantiating the detector instance directly. The middleware 166 calls the DRM agent (e.g., the DRM manager module 264) to check the applicable digital rights, including the authority and access. If the license is valid, the middleware 166 decrypts the model description 162 into the trust memory region established by the trust management subsystem 220. As should be understood, cryptography services such as encryption and decryption, are provided by the trust execution subsystem 120, and are available when a trust execution environment is established.

Referring now to FIGS. 3A-3D, example implementations of a predictive analytics service (e.g., "detector") 194 that can be handled by the middleware 166 are each shown in the context of an environment 300, 320, 340, 350 (e.g., native and/or virtual runtime or "execution" environments). The various modules depicted in the environments 300, 320, 340, 350 may be embodied as hardware, firmware, software, or a combination thereof. Each of the implementations of the predictive analytics service (e.g., "detector") 194 includes a detector (e.g., detector 310, 322, 342, 352), a model (e.g., model M1, M2, M3, M4), and a model trainer (e.g., model trainer T1, T2, T3, T4). The detector (e.g., detector 310, 322, 342, 352) is a predictive analytics service that can be requested by a user-level application 118 (e.g., application A1, A2, A3, A4). For example, the detector (e.g., detector 310, 322, 342, 352) may perform classifying, tagging, or regression analysis on data supplied by the application (e.g., application A1, A2, A3, A4) in response toa service request(e.g., an API call) from the application (e.g., application A1, A2, A3, A4). Aspects of the functionality of the detector (e.g., detector 310, 322, 342, 352), including its accuracy, efficiency, performance, etc., are determined by the model (e.g., model M1, M2, M3, M4), the particular algorithm(s) used, and the training data set used by the model trainer (e.g., model trainer T1, T2, T3, T4). The model (e.g., model M1, M2, M3, M4) is trained using the model trainer (e.g., model trainer T1, T2, T3, T4) and its associated data set.In some implementations, the detector (e.g., detector 310, 322, 342, 352) is released in source code (FIG. 3A) or as a system-level (e.g., native) library object (FIGS. 3B and 3D), and the application (e.g., application A1, A2, A4) integrates the detector (e.g., detector 310, 322, 342, 352) on the user platform (e.g., user computing device 110).For instance, in the implementation of FIG. 3A, M1 may be an analytical service that uses data mining to provide marketing analysis (e.g., an LBM service). In FIG. 3B, M2 may be a model produced by a machine learning algorithm (e.g., an adaptive boost or "Adaboost" algorithm), and the detector library object may be configured for use with a digital signal processor (DSP). In FIG. 3D, M4 may be a predictive model that uses a dynamic Bayesian network (DBN), and is configured for use with an application-specific integrated circuit (ASIC). These and many other types of analytical services can benefit from the trusted middleware 166 disclosed herein.

With the detector (e.g., detector 310, 322, 342, 352) integrated in the manner shown in FIGS. 3A, 3B, and 3D, without the protections provided by the middleware 166, the detector (e.g., detector 310, 322, 342, 352) will have direct access to the user data (e.g., user data 312, 324, 344, 354) and the user platform (e.g., user computing device 110) can discover potentially proprietary aspects of the algorithms and/or tuning parameters used by the detector (e.g., detector 310, 322, 342, 352). The implementation of FIG. 3C is a "software as a service" or "SaaS" approach in which M3, T3 are provided as a web service. Hosting the model M3 on a web server prevents access to proprietary aspects of the model M3 by the application A3 or other components of the user computing device 110. However, in the environment 340, the user data 344 is uploaded to the web service M3, T3, thus potentially raising user privacy and data control issues.

The trusted middleware 166 addresses the issues raised by the traditional implementations shown in FIGS. 3A-3D as follows.First, rather than the original models M1, M2, M3, M4, the trusted middleware 166 generates a corresponding model description 162 using the model description language 160 as described above. In each case, the middleware 166 deploys the model description 162 within a trusted execution environment of the user computing device (by, e.g., the trust execution subsystem 120). With the common middleware interface (e.g., API service 212 and management interface 214) provided by the trusted middleware 166, the same model description 162 can be used across many different devices. Moreover, rather than providing optimized versions of the models (e.g., M1, M2,3, M4) for different hardware configurations, the model trainer (e.g., T1, T2, T3, T4) can train the model once, using the common model description 162, and the resulting trained model can be used on any platform.

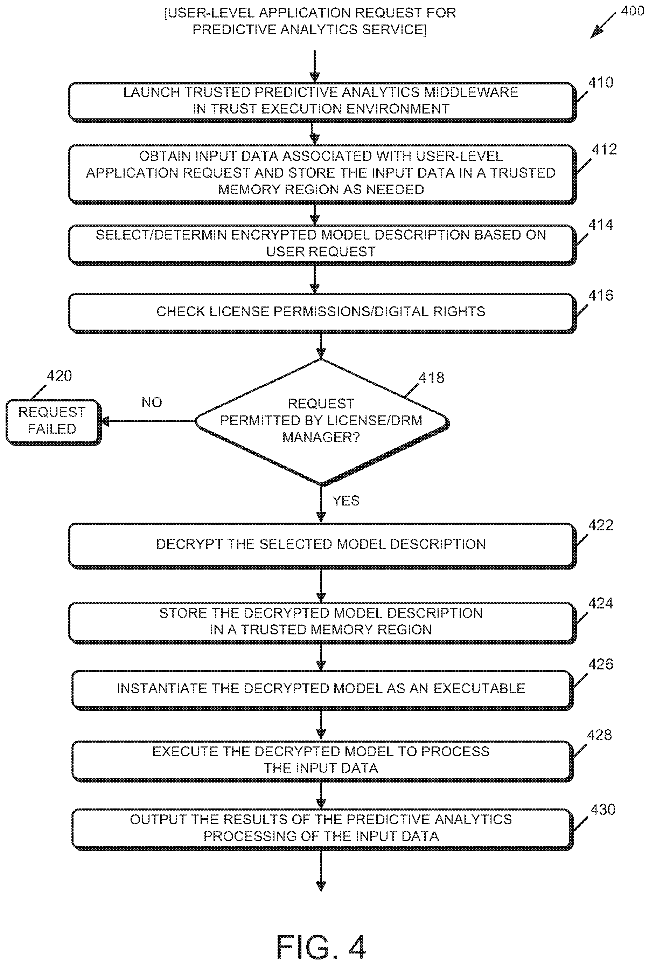

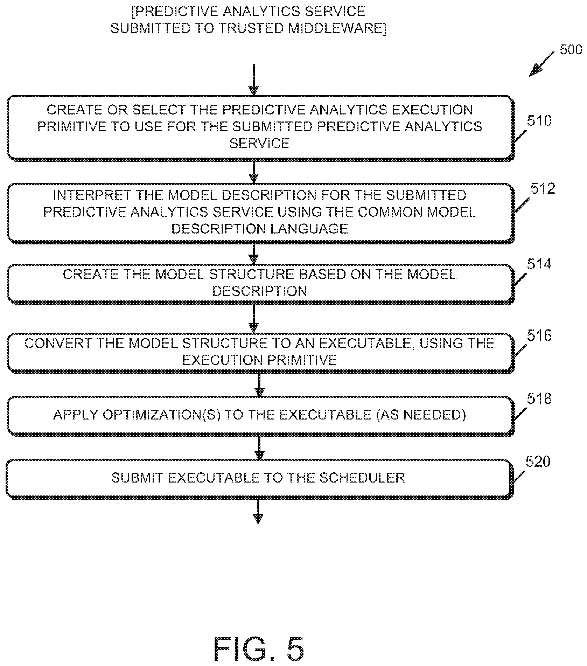

Referring now to FIG. 4, an example of a method400 for providing trusted predictive analytics services is shown. Portions of the method400 may be executed by hardware, firmware, and/or software of the computing system 100 (e.g., by the trusted predictive analytics middleware subsystem 164). The method 400 begins in response to a request for a predictive analytics service (e.g., an API call made by a user-level application). In block 410, the computing system 100 launches the trusted predictive analytics middleware in a trust execution environment. The trust execution environment is established by, e.g., the trust execution subsystem 120.In block 412, the computing system 100 obtains the input data associated with the request made by the user-level application for predictive analytics service. The input data may be, for example, a photograph, a data set, or any combination of text and/or non-text data. As a result of the establishment of the trust execution environment, in which the trusted predictive analytics middleware runs, the input data is stored in a trusted memory region (e.g., a memory region that is isolated from other memory by hardware or software). In block 414, the computing system 100 selects or determines an appropriate model description from stored model descriptions (e.g., model descriptions 162), which have been previously created by the trusted middleware using, e.g., the method shown in FIG. 5, described below. As a result of creation of the model description by the trusted middleware in a trust execution environment, the model description is encrypted by a component of the trust execution environment. In block 416, the computing system 100 checks the license agreement, usage permissions, and/or digital rights associated with the model description selected in block 414 and based on the input data associated with the user application request. In block 418, the computing system 100 determines whether the request by the user-level application (involving the input data obtained in block 412) is permitted by the applicable license/permissions/digital rights management data. The user request fails in block 420, if it is not permitted by the applicable license/permissions/digital rights management data.

If the computing system 100 determines in block 418 that the user request is permitted, the computing system 100 decrypts the model description selected in block 414 (using, e.g., a component of the trust execution environment). In block 424, the computing system 100 stores the decrypted model description in a trusted memory region (e.g., a hardware or software isolated region of the user computing device 110). In block 426, the computing system 100 instantiates the decrypted model. In block 428, the computing system 100 executes the decrypted model to process the input data, and in block 430, the computing system 100 outputs the results of executing the model on the input data.

Referring now to FIG. 5, an example of a method 400 for creating a trusted executable detector from a predictive analytics service (e.g., "detector") 194 is shown. Portions of the method 500 may be executed by hardware, firmware, and/or software of the computing system 100 (e.g., by the trusted predictive analytics middleware subsystem 164). The method 500 begins in response to the submission of a predictive analytics service or "detector" 194 to the trusted predictive analytics middleware 166. In block 510, the computing system 100 creates or selects a trusted execution primitive (e.g., a predictive analytics execution primitive 256) to use as the execution primitive in connection with the submitted predictive analytics service. In block 512, the computing system 100 converts the model for the predictive analytics service (e.g., the detector model 190) to a model description for the submitted predictive analytics service (e.g., a model description 162), using a common model description language (e.g., the model description language 160). Illustratively, this conversion is performed by the PA provider computing device 180.Once the model description 162 is created (e.g., on the computing device 180), the detector 194 can be deployed to the trusted PA middleware computing device 150 or to another computing device (e.g., by the trusted predictive analytics middleware subsystem 164), as discussed above.

In block 514, the computing system 100 creates the model structure (e.g., nodes, network, etc.), based on the model description prepared in block 512. In block 516, the computing system 100 converts the model structure to an executable, using the execution primitive created or selected in block 510. In block 518, the computing system 100 applies one or more optimizations to the executable created in block 516, as needed. In block 520, the computing system 100 submits the executable to a schedule module of the trusted middleware (e.g., the detector scheduler module 254).

## Claims

1. A computing system (100) comprising one or more computing devices (110), the computing system (100) to provide a trusted predictive analytics service, the computing system comprising:
a user computing device (110) including a user-level application (118);
a trusted predictive analytics middleware computing device (150) adapted to receive user-level application requests from the user computing device (110) via a network (170),
wherein the trusted predictive analytics middleware computing device (150) comprises a trusted predictive analytics middleware subsystem (164) adapted to, in response to a user-level application request for a predictive analytics service (194), in a trust execution environment of the computing system, cause the computing system to:
determine (414) a model description (162) for a predictive analytics model, the model description (162) created with a predictive analytics model description language (160), wherein the predictive analytics model description language (160) is to describe a plurality of different predictive analytics models using a common language;
compare (416) data associated with the user-level application request with data indicative of digital rights permissions associated with the model description (162); and if, based on the comparison of the data associated with the user-level application request with data indicative of digital rights permissions associated with the model description (162), the user-level application request is permitted,
deploy (424) the model description (162) within a trusted execution environment of the user computing device (110); and
instantiate (426) an executable (194) associated with the model description (162) inside the trusted execution environment of the user computing device (110).

2. The computing system (100) of claim 1, wherein the predictive analytics model description language (160) comprises data indicative of a predictive analytics model structure, one or more model parameters, and meta information about a predictive analytics model.

3. The computing system (100) of claim 1 or claim 2, wherein the trusted predictive analytics middleware subsystem (166) is launched, by a user computing device (110) of the computing system (100), in the trust execution environment.

4. The computing system (100) of claim 1 or claim 2, wherein the trusted predictive analytics middleware subsystem (166) is adapted to obtain input data associated with the user-level application request for a predictive analytics service, and store the input data in a trusted memory region of the trust execution environment.

5. The computing system (100) of claim 1 or claim 2, wherein the trusted predictive analytics middleware subsystem (166) is to decrypt the model description if, based on the comparison of the data associated with the user-level application request with data indicative of digital rights permissions associated with the model description (162), the user-level application request is permitted.

6. The computing system (100) of claim 5, wherein the trusted predictive analytics middleware subsystem (166) is to store the decrypted model description (162) in a trusted memory region of the trust execution environment.

7. The computing system (100) of claim 1 or claim 2, wherein the trusted predictive analytics middleware subsystem (166) is to create the executable based on a predictive analytics execution primitive and the model description (162).

8. The computing system (100) of claim 1 or claim 2, wherein the trusted predictive analytics middleware subsystem (166) comprises a digital rights management, DRM, subsystem to verify digital rights associated with the predictive analytics service (194).

9. The computing system (100) of claim 1 or claim 2, wherein the trusted predictive analytics middleware subsystem (166) comprises a model description assembler module (252) to interpret the model description (162) using the model description language (160), create a model structure for the predictive analytics service (194) based on the model description (162), and convert the model structure to an executable based on a predictive analytics execution primitive (256).

10. A method for providing a trusted predictive analytics service, the method comprising, with a computing system (100):
describing a plurality of different predictive analytics models using a common model description language;
receiving, at a trusted predictive analytics middleware computing device (150), a user-level application request from a user computing device (110) via a network (170); and
in response to the user-level application request for a predictive analytics service (194), in a trust execution environment of the computing system (100):
determining (414) a model description (162) for a predictive analytics model, the model description (162) created with the predictive analytics model description language;
comparing (416) data associated with the user-level application request with data indicative of digital rights permissions associated with the model description (162); and if, based on the comparison of the data associated with the user-level application request with data indicative of digital rights permissions associated with the model description (162), the user-level application request is permitted,
deploy (424) the model description (162) within a trusted execution environment of the user computing device (110); and
instantiating (426) an executable associated with the model description (162) inside the trusted execution environment of the user computing device (110).

11. The method of claim 10, comprising launching the trusted predictive analytics middleware subsystem (166) in the trust execution environment.

12. The method of claim 10, comprising obtaining input data associated with the user-level application request for a predictive analytics service (194), and storing the input data in a trusted memory region of the trust execution environment.

13. The method of claim 10, comprising decrypting the model description (162) if, based on the comparison of the data associated with the user-level application request with data indicative of digital rights permissions associated with the model description (162), the user-level application request is permitted.

14. The method of claim 13, comprising storing the decrypted model description (162) in a trusted memory region of the trust execution environment.

15. One or more non-transitory machine readable storage media comprising a plurality of instructions stored thereon that, in response to being executed, cause a computing system (100) to perform the method of any of claims 10-14.

## Patentansprüche

1. Datenverarbeitungssystem (100), das eine oder mehrere Datenverarbeitungseinrichtungen (110) umfasst, wobei das Datenverarbeitungssystem (100) dafür vorgesehen ist, einen vertrauenswürdigen prädiktiven Analysedienst bereitzustellen, wobei das Datenverarbeitungssystem Folgendes umfasst:
eine Nutzer-Datenverarbeitungseinrichtung (100), die eine Nutzerebene-Anwendung (118) beinhaltet,
eine vertrauenswürdige prädiktive Analyse-Middleware-Datenverarbeitungseinrichtung (150), die geeignet ist, Nutzerebene-Anwendungsanfragen von der Nutzer-Datenverarbeitungseinrichtung (110) über ein Netzwerk (170) zu empfangen,
wobei die vertrauenswürdige prädiktive Analyse-Middleware-Datenverarbeitungseinrichtung (150) ein vertrauenswürdiges prädiktives Analyse-Middleware-Teilsystem (164) umfasst, das geeignet ist, in Reaktion auf eine Nutzerebene-Anwendungsanfrage nach einem prädiktiven Analysedienst (194) in einer vertrauenswürdigen Ausführungsumgebung des Datenverarbeitungssystems das Datenverarbeitungssystem zu Folgendem zu veranlassen:
eine Modellbeschreibung (162) für ein prädiktives Analysemodell zu bestimmen (414), wobei die Modellbeschreibung (162) mit einer Beschreibungssprache (160) für prädiktive Analysemodelle erstellt wird, wobei die Beschreibungssprache (160) für prädiktive Analysemodelle dafür vorgesehen ist, eine Vielzahl verschiedener prädiktiver Analysemodelle mittels einer gemeinsamen Sprache zu beschreiben,
der Nutzerebene-Anwendungsanfrage zugehörige Daten mit der Modellbeschreibung (162) zugehörigen Daten zu vergleichen (416), die digitale Rechtegenehmigungen anzeigen, und falls auf Grundlage des Vergleichs der der Nutzerebene-Anwendungsanfrage zugehörigen Daten mit der Modellbeschreibung (162) zugehörigen Daten, die digitale Rechtegenehmigungen anzeigen, die Nutzerebene-Anwendungsanfrage genehmigt wird,
die Modellbeschreibung (162) innerhalb einer vertrauenswürdigen Ausführungsumgebung der Nutzer-Datenverarbeitungseinrichtung (110) einzusetzen (424) und
eine der Modellbeschreibung (162) zugehörige ausführbare Datei (194) in der vertrauenswürdigen Ausführungsumgebung der Nutzer-Datenverarbeitungseinrichtung (110) zu instanziieren (426) .

2. Datenverarbeitungssystem (100) nach Anspruch 1, wobei die Beschreibungssprache (160) für prädiktive Analysemodelle Daten umfasst, die eine Struktur prädiktiver Analysemodelle, einen oder mehrere Modellparameter und Metainformationen über ein prädiktives Analysemodell anzeigen.

3. Datenverarbeitungssystem (100) nach Anspruch 1 oder Anspruch 2, wobei das vertrauenswürdige prädiktive Analyse-Middleware-Teilsystem (166) durch eine Nutzer-Datenverarbeitungseinrichtung (110) des Datenverarbeitungssystems (100) in der vertrauenswürdigen Ausführungsumgebung gestartet wird.

4. Datenverarbeitungssystem (100) nach Anspruch 1 oder Anspruch 2, wobei das vertrauenswürdige Analyse-Middleware-Teilsystem (166) geeignet ist, der Nutzerebene-Anwendungsanfrage nach einem prädiktiven Analysedienst zugehörige Eingabedaten zu beziehen und die Eingabedaten in einem vertrauenswürdigen Speicherbereich der vertrauenswürdigen Ausführungsumgebung zu speichern.

5. Datenverarbeitungssystem (100) nach Anspruch 1 oder Anspruch 2, wobei das vertrauenswürdige prädiktive Analyse-Middleware-Teilsystem (166) dafür vorgesehen ist, die Modellbeschreibung zu entschlüsseln, falls auf Grundlage des Vergleichs der der Nutzerebene-Anwendungsanfrage zugehörigen Daten mit der Modellbeschreibung (162) zugehörigen Daten, die digitale Rechtegenehmigungen anzeigen, die Nutzerebene-Anwendungsanfrage genehmigt wird.

6. Datenverarbeitungssystem (100) nach Anspruch 5, wobei das vertrauenswürdige prädiktive Analyse-Middleware-Teilsystem (166) dafür vorgesehen ist, die entschlüsselte Modellbeschreibung (162) in einem vertrauenswürdigen Speicherbereich der vertrauenswürdigen Ausführungsumgebung zu speichern.

7. Datenverarbeitungssystem (100) nach Anspruch 1 oder Anspruch 2, wobei das vertrauenswürdige prädiktive Analyse-Middleware-Teilsystem (166) dafür vorgesehen ist, die ausführbare Datei auf Grundlage eines Ausführungsprimitivs für prädiktive Analyse und der Modellbeschreibung (162) zu erstellen.

8. Datenverarbeitungssystem (100) nach Anspruch 1 oder Anspruch 2, wobei das vertrauenswürdige prädiktive Analyse-Middleware-Teilsystem (166) ein Teilsystem zur Verwaltung digitaler Rechte, DRM (Digital Rights Management), umfasst, um dem prädiktiven Analysedienst (194) zugehörige digitale Reche zu verifizieren.

9. Datenverarbeitungssystem (100) nach Anspruch 1 oder Anspruch 2, wobei das vertrauenswürdige prädiktive Analyse-Middleware-Teilsystem (166) ein Modellbeschreibungs-Assemblermodul (252) umfasst, um die Modellbeschreibung (162) mittels der Modellbeschreibungssprache (160) zu interpretieren, auf Grundlage der Modellbeschreibung (162) eine Modellstruktur für den prädiktiven Analysedienst (194) zu erstellen und die Modellstruktur auf Grundlage eines Ausführungsprimitivs (256) für prädiktive Analyse in eine ausführbare Datei umzuwandeln.

10. Verfahren zum Bereitstellen eines vertrauenswürdigen prädiktiven Analysedienstes, wobei das Verfahren mit einem Datenverarbeitungssystem (100) Folgendes umfasst:
Beschreiben einer Vielzahl verschiedener prädiktiver Analysemodelle mittels einer gemeinsamen Modellbeschreibungssprache,
Empfangen einer Nutzerebene-Anwendungsanfrage von einer Nutzer-Datenverarbeitungseinrichtung (110) über ein Netzwerk (170) an einer vertrauenswürdigen prädiktiven Analyse-Middleware-Datenverarbeitungseinrichtung (150) und
in Reaktion auf die Nutzerebene-Anwendungsanfrage nach einem prädiktiven Analysedienst (194), in einer vertrauenswürdigen Ausführungsumgebung des Datenverarbeitungssystems (100):
Bestimmen (414) einer Modellbeschreibung (162) für ein prädiktives Analysemodell, wobei die Modellbeschreibung (162) mit der Beschreibungssprache für prädiktive Analysemodelle erstellt wird,
Vergleichen (416) der Nutzerebene-Anwendungsanfrage zugehöriger Daten mit der Modellbeschreibung (162) zugehörigen Daten, die digitale Rechtegenehmigungen anzeigen, und falls auf Grundlage des Vergleichs der der Nutzerebene-Anwendungsanfrage zugehörigen Daten mit der Modellbeschreibung (162) zugehörigen Daten, die digitale Rechtegenehmigungen anzeigen, die Nutzerebene-Anwendungsanfrage genehmigt wird,
Einsetzen (424) der Modellbeschreibung (162) innerhalb einer vertrauenswürdigen Ausführungsumgebung der Nutzer-Datenverarbeitungseinrichtung (110) und Instanziieren (426) einer der Modellbeschreibung (162) zugehörigen ausführbaren Datei in der vertrauenswürdigen Ausführungsumgebung der Nutzer-Datenverarbeitungseinrichtung (110).

11. Verfahren nach Anspruch 10, umfassend Starten des vertrauenswürdigen prädiktiven Analyse-Middleware-Teilsystems (166) in der vertrauenswürdigen Ausführungsumgebung.

12. Verfahren nach Anspruch 10, umfassend Beziehen der Nutzerebene-Anwendungsanfrage nach einem prädiktiven Analysedienst (194) zugehöriger Eingabedaten und Speichern der Eingabedaten in einem vertrauenswürdigen Speicherbereich der vertrauenswürdigen Ausführungsumgebung.

13. Verfahren nach Anspruch 10, umfassend Entschlüsseln der Modellbeschreibung (162), falls auf Grundlage des Vergleichs der der Nutzerebene-Anwendungsanfrage zugehörigen Daten mit der Modellbeschreibung (162) zugehörigen Daten, die digitale Rechtegenehmigungen anzeigen, die Nutzerebene-Anwendungsanfrage genehmigt wird.

14. Verfahren nach Anspruch 13, umfassend Speichern der entschlüsselten Modellbeschreibung (162) in einem vertrauenswürdigen Speicherbereich der vertrauenswürdigen Ausführungsumgebung.

15. Ein oder mehrere nichtflüchtige maschinenlesbare Speichermedien, die eine Vielzahl auf diesen gespeicherter Anweisungen umfassen, die bei Ausführung ein Datenverarbeitungssystem (100) veranlassen, das Verfahren nach einem der Ansprüche 10 bis 14 durchzuführen.

## Revendications

1. Système informatique (100) comprenant un ou plusieurs dispositifs informatiques (110), le système informatique (100) permettant de fournir un service sécurisé d'analyses prédictives, le système informatique comprenant :
un dispositif informatique d'utilisateur (110) comprenant une application de niveau d'utilisateur (118) ;
un dispositif informatique d'intergiciel sécurisé d'analyses prédictives (150) adapté pour recevoir des demandes d'application de niveau d'utilisateur provenant du dispositif informatique d'utilisateur (110) par le biais d'un réseau (170),
dans lequel le dispositif informatique d'intergiciel sécurisé d'analyses prédictives (150) comprend un sous-système d'intergiciel sécurisé d'analyses prédictives (164) adapté pour, en réponse à une demande d'application de niveau d'utilisateur pour un service d'analyses prédictives (194), dans un environnement d'exécution sécurisé du système informatique, amener le système informatique à :
déterminer (414) une description de modèle (162) pour un modèle d'analyses prédictives, la description de modèle (162) est créée avec un langage de description de modèle d'analyses prédictives (160), dans lequel le langage de description de modèle d'analyses prédictives (160) sert à décrire une pluralité de modèles différents d'analyses prédictives à l'aide d'un langage commun ;
comparer (416) des données associées à la demande d'application de niveau d'utilisateur à des données indiquant des autorisations de droits numériques associées à la description de modèle (162) ; et si, sur la base de la comparaison des données associées à la demande d'application de niveau d'utilisateur aux données indiquant des autorisations de droits numériques associées à la description de modèle (162), la demande d'application de niveau d'utilisateur est autorisée,
déployer (424) la description de modèle (162) dans un environnement d'exécution sécurisé du dispositif informatique d'utilisateur (110) ; et
instancier (426) un exécutable (194) associé à la description de modèle (162) à l'intérieur de l'environnement d'exécution sécurisé du dispositif informatique d'utilisateur (110).

2. Système informatique (100) selon la revendication 1, dans lequel le langage de description de modèle d'analyses prédictives (160) comprend des données indiquant une structure de modèle d'analyses prédictives, un ou plusieurs paramètres de modèle et des méta informations concernant un modèle d'analyses prédictives.

3. Système informatique (100) selon la revendication 1 ou la revendication 2, dans lequel le sous-système d'intergiciel sécurisé d'analyses prédictives (166) est lancé, par un dispositif informatique d'utilisateur (110) du système informatique (100), dans l'environnement d'exécution sécurisé.

4. Système informatique (100) selon la revendication 1 ou la revendication 2, dans lequel le sous-système d'intergiciel sécurisé d'analyses prédictives (166) est adapté pour obtenir des données d'entrée associées à la demande d'application de niveau d'utilisateur pour un service d'analyses prédictives, et stocker les données d'entrée dans une région de mémoire sécurisée de l'environnement d'exécution sécurisé.

5. Système informatique (100) selon la revendication 1 ou la revendication 2, dans lequel le sous-système d'intergiciel sécurisé d'analyses prédictives (166) sert à déchiffrer la description de modèle si, sur la base de la comparaison des données associées à la demande d'application de niveau d'utilisateur aux données indiquant des autorisations de droits numériques associées à la description de modèle (162), la demande d'application de niveau d'utilisateur est autorisée.

6. Système informatique (100) selon la revendication 5, dans lequel le sous-système d'intergiciel sécurisé d'analyses prédictives (166) sert à stocker la description de modèle déchiffrée (162) dans une région de mémoire sécurisée de l'environnement d'exécution sécurisé.

7. Système informatique (100) selon la revendication 1 ou la revendication 2, dans lequel le sous-système d'intergiciel sécurisé d'analyses prédictives (166) sert à créer l'exécutable sur la base d'une primitive d'exécution d'analyses prédictives et de la description de modèle (162).

8. Système informatique (100) selon la revendication 1 ou la revendication 2, dans lequel le sous-système d'intergiciel sécurisé d'analyses prédictives (166) comprend un sous-système de gestion de droits numériques, DRM, pour vérifier les droits numériques associés au service d'analyses prédictives (194) .

9. Système informatique (100) selon la revendication 1 ou la revendication 2, dans lequel le sous-système d'intergiciel sécurisé d'analyses prédictives (166) comprend un module d'assembleur de description de modèle (252) pour interpréter la description de modèle (162) à l'aide du langage de description de modèle (160), créer une structure de modèle pour le service d'analyses prédictives (194) sur la base de la description de modèle (162), et convertir la structure de modèle en un exécutable basé sur une primitive d'exécution d'analyses prédictives (256).

10. Procédé permettant de fournir un service sécurisé d'analyses prédictives, le procédé comprenant, avec un système informatique (100) :
la description d'une pluralité de modèles différents d'analyses prédictives à l'aide d'un langage commun de description de modèle ;
la réception, au niveau d'un dispositif informatique d'intergiciel sécurisé d'analyses prédictives (150), d'une demande d'application de niveau d'utilisateur provenant d'un dispositif informatique d'utilisateur (110) par le biais d'un réseau (170) ; et
en réponse à la demande d'application de niveau d'utilisateur pour un service d'analyses prédictives (194), dans un environnement d'exécution sécurisé du système informatique (100) :
déterminer (414) une description de modèle (162) pour un modèle d'analyses prédictives, la description de modèle (162) est créée avec un langage de description de modèle d'analyses prédictives ;
comparer (416) des données associées à la demande d'application de niveau d'utilisateur à des données indiquant des autorisations de droits numériques associées à la description de modèle (162) ; et si, sur la base de la comparaison des données associées à la demande d'application de niveau d'utilisateur aux données indiquant des autorisations de droits numériques associées à la description de modèle (162), la demande d'application de niveau d'utilisateur est autorisée,
déployer (424) la description de modèle (162) dans un environnement d'exécution sécurisé du dispositif informatique d'utilisateur (110) ; et
instancier (426) un exécutable associé à la description de modèle (162) à l'intérieur de l'environnement d'exécution sécurisé du dispositif informatique d'utilisateur (110).

11. Procédé selon la revendication 10, comprenant le lancement du sous-système d'intergiciel sécurisé d'analyses prédictives (166) dans l'environnement d'exécution sécurisé.

12. Procédé selon la revendication 10, comprenant l'obtention de données d'entrée associées à la demande d'application de niveau d'utilisateur pour un service d'analyses prédictives (194), et le stockage des données d'entrée dans une région de mémoire sécurisée de l'environnement d'exécution sécurisé.

13. Procédé selon la revendication 10, comprenant le déchiffrage de la description de modèle (162) si, sur la base de la comparaison des données associées à la demande d'application de niveau d'utilisateur aux données indiquant des autorisations de droits numériques associées à la description de modèle (162), la demande d'application de niveau d'utilisateur est autorisée.

14. Procédé selon la revendication 13, comprenant le stockage de la description de modèle déchiffrée (162) dans une région de mémoire sécurisée de l'environnement d'exécution sécurisé.

15. Un ou plusieurs supports de stockage lisibles par machine non transitoires comprenant une pluralité d'instructions stockées dessus qui, en réponse à leur exécution, amènent un système informatique (100) à mettre en œuvre le procédé selon l'une quelconque des revendications 10 à 14.
